# EUROPÄISCHE PATENTSCHRIFT

(11) **EP 0 582 138 B1**
(45) Veröffentlichungstag und Bekanntmachung des Hinweises auf die Patenterteilung: **04.06.1997**
(21) Anmeldenummer: 93111720.4
(22) Anmeldetag: 22.07.1993
(51) Int. Cl.: G07C 1/26, G06K 7/08

(54) **Einrichtung zum Erfassen von Echtzeitinformationen**
Device for detecting real time information
Dispositif pour détecter des informations en temps réel

(30) Priorität: 01.08.1992 DE 9210317 U; 22.04.1993 DE 9306091 U
(43) Veröffentlichungstag der Anmeldung: 09.02.1994
(73) Patentinhaber: Diehl Ident GmbH, D-90478 Nürnberg (DE)
(72) Erfinder: Riesner, Gerhard, D-90469 Nürnberg (DE); Göcke, Wilhelm, D-91227 Leinburg (DE)
(74) Vertreter: Hofmann, Gerhard, Dipl.-Ing. Patentassessor

(56) Entgegenhaltungen:
- EP-A- 0 064 787
- EP-A- 0 432 801
- EP-A- 0 487 810
- DE-A- 3 929 048
- PATENT ABSTRACTS OF JAPAN vol. 014, no. 485 (C-0772) 23. Oktober 1990 & JP-A-02 200 280
- DIE BRIEFTAUBE vom 25.07.1992: "Tauben-Identifikations- und Preisflug-Echtzeit-System (TIPES)"

## Beschreibung

Die Erfindung betrifft eine Einrichtung gemäß dem Oberbegriff des Anspruches 1.

Eine derartige Einrichtung ist in dem Bericht ,,Tauben-Identifikations- und Preisflug-Echtzeit-System (TIPES)" beschrieben, der in der Zeitschrift "Die Brieftaube" vom 25.07.1992 erschien. Dann wird als Herzstück des Systems ein kombiniertes Lese-, Kontroll- und Eingabegerät mit eingebauter Funkuhr dargestellt, das entweder an eine Antenne zur Abfrage des eine Brieftaube ihr Leben lang individualisirenden Transponders oder aber an einen Computer zur Datenauswertung angeschlossen wird. Die Transponder-Identifizierung der nach einem Wettflug in ihren Heimatschlag zurückkehrenden Tauben ist in dem teilweise prioritätsbegründenden deutschen Gebrauchsmuster G 92 10 317 näher beschrieben. Derartige Einrichtungen sind aber nicht nur für den hier bevorzugt betrachteten Brieftaubensport verwendbar, sondern auch darüber hinaus vorteilhaft einsetzbar, wenn es beispielsweise im Bereiche sportlicher Wettbewerbe darum geht, die Einlauffolge und/oder die Einlauf-Zeitpunkte der individuellen Wettkampf-Teilnehmer für die spätere Auswertung zu Sieg- und Platz-Tabellen zu erfassen. Schließlich sind solche Einrichtungen auch im Rahmen von Automatisierungstechniken von Interesse, etwa um den Materialtransport hinsichtlich individueller Produkte im Zuge der Fertigung bzw. im Zuge der Auslieferung erfassen und später auch noch rekonstruieren zu können.

Dagegen geht es bei der sogenannten Taubenuhr nach der EP-A-0 064 787 nicht um die dauerhafte Individualisierung von Tauben, sondern um die Identifizierung aktueller Wettkampf-Teilnehmer. Dafür wird dort den Teilnehmern ein für den aktuell zu bestreitenden Wettkampf gültiger Kennungsring mitgegeben, und diesem Ring wird am Zielort nach der Abnahme von der Taube die Ankunftszeit eingeprägt. Das kann automatisch im Zuge der Übergabe des Ringes in einen Uhrenkasten erfolgen, mit elektronischer Registrierung, Speicherung und Darstellung der so gewonnenen Zuordnung zwischen Ankunftszeit und Teilnehmerring. Eine wettkampfunabhängige, stets gültige Individualisierung der Taube (ohne das Erfordernis, beim Zieleinflug einen Kennungsring abnehmen zu müssen) mit Zuordnung der aktuellen Ankunftszeit zur stets (ein Leben lang) zutreffenden Identinformation über diese Taube ist dort nicht vorgesehen.

Letzteres gilt entsprechend für die aus der EP-A- 0 487 810 bekannten Maßnahmen zur Vermeidung von Wettkampf-Betrug dadurch, daß während des Wettkampffluges in einem von der Taube mitgeführten Gerät aktuell angetroffene Umgebungsinformationen abgespeichert werden. Dafür ist die Annahme zugrundegelegt, daß alle Tauben eines aktuellen Preisflugs gleiche Strecken gleichzeitig durchfliegen und somit gleiche Umgebungssituationen antreffen, während Tauben eines anderen Fluges nicht gleiche Umgebungssituationen antreffen (was beides nur unter sehr großen Vorbehalten zutrifft). Aber selbst dann, wenn es - wie im Falle vorliegender Erfindung - um eindeutige Zuordnung bestimmter.Datensätze zu individuellen Objekten geht, ist es noch nicht damit getan, diese Objekte selbst eindeutig (etwa durch einen bestimmten Nummernkreis) zu identifizieren. Denn durch Übertragungsfehler, aber auch durch Manipulations- bis hin zu Sabotage-Versuchen, können die Indentifizieningen bzw. die ihnen spezifisch zuzuordnenden aktuellen Ergänzungsinformationen verfälscht sein; wobei eine Verfälschung auch schon darin liegen kann, daß aufgrund späterer Manipulation im Datenbestand die abgespeicherte Daten-Reihenfolge gegenüber der real aufgetretenen Daten-Reihenfolge verändert wird. Wenn solche Fehler und Eingriffsfolgen nicht unterbunden oder wenigstens nachträglich eindeutig als solche erkannt werden können, dann ist eine solche Einrichtung nicht im erforderlichen Umfang fälschungssicher und somit für zahlreiche Einsatzzwecke nicht unbedingt geeignet, bei denen es etwa auf nachträgliche Dokumentationsmöglichkeiten und auf die Weiterverarbeitung des Datenanfalls ankommt - wie etwa beim Sport, aber auch bei einer sicherheitstechnischen Zugangskontrolle oder bei der ordnungsrechtlich ausgestalteten Abfallbeseitigung.

Zwar ist durch die zentrale Auswertung der zwischengespeicherten Ergebnisdaten bereits eine gewisse Sicherheit gegen Ergebnisverfälschungen erzielt, was aber vor allem die Relation konkurrierend erfaßter und abgespeicherter Daten betrifft. Bis zur Auswertung können alle im jeweiligen Universalgerät abgespeicherten Daten noch modifiziert werden. Außerdem ist es unnötig beschwerlich, ein Universalgerät mit zahlreichen bei der Auswertung gar nicht mehr benötigten Funktionen zum Auswertegerät schaffen zu müssen, wo lediglich die abgespeicherten Daten als solche für die weitere Auswertung abgerufen werden.

Deshalb liegt vorliegender Erfindung die Aufgabe zugrunde, eine Einrichtung gattungsgemäßer Art derart weiterzubilden, daß einerseits die Übergabe der aufgenommenen Daten an ein zentrales Auswertegerät erleichtert und andererseits eine größere Sicherheit gegen nachträgliche Datenmanipulation eröffnet wird, so daß bewußt verfälschende Eingriffe in den Datenbestand praktisch ausgeschlossen werden und - aus welchem Grunde immer - etwa nachträglich dennoch aufgetretene Veränderungen im einmal erfaßten Datenbestand als solche erkannt werden können, um z. B. die entsprechenden Daten von der regulären Weiterbehandlung auszunehmen.

Diese Aufgabe ist erfindungsgemäß im wesentlichen dadurch gelöst, daß die gattungsgemäße Einrichtung auch die Teilmerkmale des Kennzeichnungsteiles des Hauptanspruches aufweist.

Nach dieser Lösung wird im Zuge der Erfassung und Aufbereitung der Daten unterschieden zwischen einem Erfassungsbereich, einem Zwischenspeicherbereich und einem Verarbeitungsbereich. Der Erfassungsbereich umfaßt die Antennen zur berührungslosen Abfrage von Kennzeichnungsträgern einschließlich eines Lesegerätes zur Kombination der abgefragten Informationen mit hinterlegten oder ergänzten Sicherungsinformationen. Das Erfassungsgerät einschließlich seines Lesegerätes können für ständige oder intermittierende Nutzung am Erfassungsort aufgestellt bzw. fest installiert sein, und sie verbleiben in der Regel dort.

Dagegen ist für die Zwischenspeicherung ein hier sogenanntes Bediengerät vorgesehen, das der Aufnahme und Darbietung der vom Lesegerät gelieferten, um Sicherungsinformationen ergänzten Ident-Informationen dient; aber nur der Abspeicherung und Darbietung in der aufgenommenen Reihenfolge der Informationen, noch nicht der weiteren Verarbeitung. Für letztere muß das handlich ausgelegt und deshalb leicht transportierbare Bediengerät an ein zentral betriebenes und gesondert überwachtes Auswertegerät überbracht werden, in das die eingespeicherte Datenfolge für die weitere Verarbeitung (beispielsweise zur Erstellung für Preislisten oder Müllabfuhrrechnungen) ausgelesen wird.

Da keinerlei Einspeisung in das Bediengerät außer vom Abfragegerät möglich ist, und da keinerlei Ausgabe der zwischengespeicherten Datensätze außer unmittelbar in das autorisierte Auswertegerät möglich ist, ist sichergestellt, daß die erfaßten Datensätze zwar informationshalber am Bediengerät angeschaut und auch zur Dokumentation komplett oder teilweise ausgedruckt werden können, aber keinerlei Veränderung erfahren, also im aufgenommenen Originalzustand unmittelbar an das autorisierte Auswertegerät übergeben werden.

Zur Sicherung gegen etwaige Manipulationen werden nicht nur die Ident-Informationen von den erfaßten Objekten verschlüsselt über das Lesegerät an das Bediengerät übertragen, sondern im Lesegerät erfahren sie noch eine Hintergrundmodulation, die eine spätere Umstellung in der Daten-Reihenfolge erkennen läßt, sowie eine Kombination mit Echtzeitinformationen, die auf die durch Funk übermittelte gesetzliche Zeit und damit auf eine einzige, zentrale Zeitbasis synchronisiert sind. Auffallende Abweichungen der Zeitinformation aus der internen Uhrenschaltung im Vergleich zur gesetzlichen Zeit werden gesondert erfaßt und zusätzlich im betroffenen Datensatz dokumentiert, so daß es auch nicht möglich ist, unauffällig die interne Uhr durch einen Störsender zu verstellen und damit die Zeitbasis im Vergleich zu anderen Echtzeit-Datenerfassungssystemen zu verschieben.

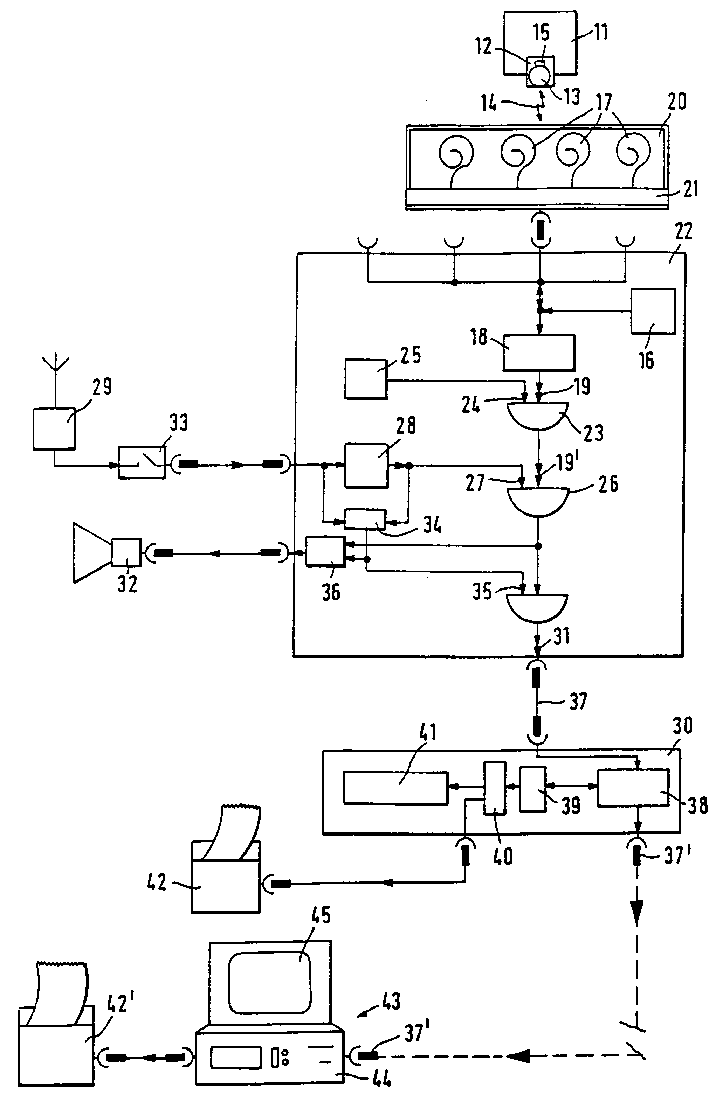

Zusätzliche Alternativen und Weiterbildungen sowie weitere Merkmale und Vorteile der Erfindung ergeben sich aus den weiteren Ansprüchen und, auch unter Berücksichtigung der Darlegungen in der Kurzfassung, aus nachstehender Beschreibung eines in der Zeichnung unter Beschränkung auf das Wesentliche als einpoliges Blockschaltbild stark abstrahiert skizzierten bevorzugten Realisierungsbeispiels zur erfindungsgemäßen Lösung. Die einzige Figur der Zeichnung zeigt ein Bediengerät, das zur Aufnahme von Informationen an ein Lesegerät angeschlossen ist, von dem es getrennt und statt dessen an ein Auswertegerät für die Verarbeitung der aufgenommenen Informationen angeschlossen werden kann.

Jedes zu erfassende Objekt 11, etwa ein individuelles Lebewesen als Teilnehmer eines Wettkampfes oder eine individuelle Sache im Zuge der Passage vorbestimmter Orte, ist mit einem es individualisierenden Kennungsträger 12 ausgestattet. Der weist eine Spule 13 auf, in welcher mittels eines induktiven Hochfrequenz-Feldes 14 eine Spannung zum Betrieb einer Leseschaltung 15 induziert wird. Die bedämpft in einem eingespeicherten Rhythmus die Spule 13. Daraus resultiert in der von einer Hochfrequenz-Quelle 16 gespeisten magnetischen Antenne 17 im gleichen Rhythmus eine Amplitudenschwankung, die von einem Wandler 18 in eine digitale Ident-Information 19 umgesetzt wird.

Um mehrere Objekte 11 quasi gleichzeitig erfassen zu können, sind mehrere Antennen 17 apparativ zu einem Erfassungsgerät 20 zusammengefaßt, das mit einem Umschalter 21 zur Multiplex-Abfrage der Antennen 17 ausgestattet ist. Mehrere solcher fassungsgeräte 20 können an ein Lesegerät 22 angeschlossen werden, in dem dann der Eingangsspeicher des Wandlers 18 etwa zeitlich überlappend auftretende Informationen von den Erfassungsgeräten 20 vor der seriellen Ausgabe als digitale Ident-Informationen 19 zur Zwischenspeicherung parallel aufnimmt.

Jedes Objekt 11 ist durch den in seine Leseschaltung 15 eingespeicherten Zahlen- und/oder Buchstaben-Code eindeutig identifiziert. Dieser Code wird aber nicht unmittelbar als Binärinformation zur Bedämpfung der Spule 13 herangezogen, sondern zuvor mit einem Zufallscode verschlüsselt. Dadurch ist sichergestellt, daß die im Lesegerät 22 gewonnene Ident-Information 19 nicht dadurch manipuliert werden kann, daß jemand das magnetische Antennenfeld 14 mit einer bestimmten Information bedämpft; denn für eine wirksame Manipulation müßte auch der aktuelle Verschlüsselungscode bekannt sein, ohne den später die Entschlüsselung in eine Ursprungsinformation nicht mehr möglich ist.

Im Lesegerät 22 wird die verschlüsselt empfangene Ident-Information 19 mittels einer Verknüpfungsschaltung 23 entschlüsselt und gegebenenfalls außerdem mit einer fortlaufenden Hintergrundinformation 24 aus einem Signalgenerator 25 hinterlegt. Sollten später Ident-Informationen 19' durch Löschung oder Austausch manipuliert werden, dann würde in der verbleibenden Folge der Ident-Informationen 19' die Hintergrundinformation 24 nicht mehr kontinuierlich enthalten sein, sondern Lücken oder Sprünge aufweisen. Das läßt sich bei der päteren Auswertung der Informationen 19' leicht detektieren, um insoweit die Auswertung zu sperren oder zumindest mit Markierungen zu versehen, durch welche die Ergebnisse hinsichtlich ihrer Gültigkeit wegen möglicher Manipulationseingriffe relativiert werden.

Schon die verschlüsselt empfangene Ident-Information 19 oder wie dargestellt die zusätzlich gesicherte Ident-Information 19' wird in einer Kombinationsschaltung 26 um eine Echtzeitinformation 27 ergänzt. Diese wird von einer autonom arbeitenden und vorzugsweise quarzstabilisierten Uhrenschaltung 28 geliefert. Eine bei autonomen Uhren nie ganz auszuschließende Langzeit-Gangabweichung gegenüber dem tatsächlichen Zeitablauf wird mittels eines Zeitempfängers 29 korrigiert, der das quasi-kontinuierlich beispielsweise über einen Langwellen-Sender ausgestrahlte Telegramm der gesetzlichen Zeit empfängt, demoduliert und in eine Kodierung zur gegebenenfalls erforderlichen Korrektur einer abweichenden aktuellen Zeitangabe von der Uhrenschaltung 28 umsetzt. Dadurch ist sichergestellt, daß die vom Lesegerät 22 an ein Bediengerät 30 ausgegebene Echt-Identinformation 31 stets eine Verknüpfung der aktuell erfaßten Ident-Information 19 mit der zutreffenden Zeitinformation 27 darstellt. Die Verfügbarkeit einer neuen Echtzeit-Identinformation 31 (aufgrund momentaner Erfassung eines Objektes 11 mittels einer der Antennen 17) kann zur Kontrolle von einem optischen und/oder akustischen Signalgeber 32 signalisiert werden.

Insbesondere bei einem batteriebetriebenen System wird man wegen der hohen Konstanz der stabilisiert betriebenen Uhrenschaltung 28 den Zeitempfänger 29 nicht stets in Betrieb halten müssen. Es genügt, ihn von Zeit zu Zeit - etwa einmal täglich - in Betrieb zu setzen bzw. an das Lesegerät 22 anzuschalten, was in der Zeichnung durch einen Schalter 33 veranschaulicht ist. Wenn in der Empfangspause nicht gerade ein Sommerzeit-Winterzeit-Wechsel stattgefunden hat, und wenn die Uhrenschaltung 28 ordnungsgemäß arbeitet, dann liegen deren zu korrigierende Zeitabweichungen allenfalls in der Größenordnung von Sekunden-Bruchteilen, was für die Bewertung der Echtzeit-Identinformationen 31 ohne Bedeutung ist. Wenn sich beim vorübergehenden Zuschalten des Zeitempfängers 29 allerdings ein größerer Korrekturbedarf herausstellt, etwa wegen einer Funktionsstörung der autarken Uhrenschaltung 28, dann spricht eine Vergleichsschwelle 34 an, um die (korrigierte) Echtzeit-Identinformation 31 mit einer Hinweisinformation 35 zu ergänzen. Bei dieser kann es sich einfach um eine Marke handeln, die bei der späteren Datenauswertung eine Warnung hinsichtlich der Zuverlässigkeit der aktuellen Information auslöst; oder es wird der konkrete Zahlenwert angegeben, um den die aus der Uhrenschaltung 28 gelieferte Zeitinformation 27 vom Zeitempfänger 29 korrigiert wurde. Wenn die Zeit-Vergleichsschwelle 34 zusätzlich dafür ausgelegt ist, mit der Hinweisinformation 35 die Nachricht zu übermitteln, daß beim Zuschalten des Zeitempfängers 29 keine (oder jedenfalls keine nennenswerte) Korrektur der Zeitinformation 27 aus der Uhrenschaltung 28 erforderlich war, dann kann aus der im Bediengerät 30 abgespeicherten Folge der Echtzeit-Identinformationen 31 aufgrund dieses Zusatzes später festgestellt werden, welche Ident-Informationen 19 zeitlich auf jeden Fall korrekt erfaßt wurden, und in welcher Erfassungszeitspanne aufgrund von Störungen Fehlzeiten aufgetreten sein können.

Fehlzeiten können insbesondere dadurch hervorgerufen werden, daß ein Saboteur mit einem Störsender ein falsch kodiertes Zeitprogramm in einen Empfänger 29 einstrahlt und dadurch die freilaufende interne Uhrenschaltung 28 vorübergehend völlig verstellt. Ein solcher Sabotageakt ist also später aus der Zusatzinformation in der Folge der abgespeicherten Echtzeit-Identinformationen 31 eindeutig ersichtlich. Es kann zusätzlich vorgesehen sein, aus der Zeit-Vergleichsschwelle 34 den Signalgeber 32 über einen Modulator 36 anzusteuern, um etwa durch an- und abschwellende Töne den Betreiber des Systemes darauf aufmerksam zu machen, daß jüngst eine außergewöhnliche Abweichung in der Zeitinformation 27 aufgetreten ist, um das System sofort kontrollieren und den Fremdeingriff möglicherweise dingfest machen zu können. Solche externen Manipulationen der Zeitinformation 27 lassen sich in der Praxis aber einfach dadurch ausschließen, daß der Zeitempfänger 29 eine gewisse Zeitspanne vor Beginn der Übernahme einer Serie von Identinformationen 19 einmal oder mehrmals eingeschaltet wird und dann während der Datenerfassung die dadurch aktuell und zuverlässig gestellte Uhrenschaltung 28 ohne externe Beeinflussung arbeitet. Nach Abschluß der Datenerfassung, etwa am Abend eines Wettkampftages, wird der Zeitempfänger 29 zur Kontrolle erneut eingeschaltet. Mit einer ebenfalls zur Kontrolle eingespeisten speziellen Identinformation 19 wird die dann auftretende Hinweisinformation 35 verknüpft, so daß am Ende des im Bediengerät 30 abgespeicherten Protokolls über die der Reihe nach aufgenommenen Identinformationen 19 eine eindeutige Aussage darüber verfügbar ist, ob die registrierten Zeitinformationen 27 ohne Sprünge kontinuierlich durchliefen.

Die im Lesegerät 22 erfaßten, verarbeiteten und kombinierten Informationen werden also als Echtzeit-Identinformationen 31 über Steckerkabel 27 an ein Bediengerät 30 übermittelt und darin über eine Weiche 38 in der Reihenfolge ihres Eingangs in einem nichtflüchtigen Speicher 39 abgelegt. Über ein manuell bedienbares Interface 40 kann der gesamte Inhalt des Speichers 39 oder ein aus der Folge der abgespeicherten Echtzeit-Informationen 31 ausgewählter Teil zur optischen Darbietung auf einem Display 41 und/oder zur Protokollierung auf einem extern anschließbaren Drucker 42 abgerufen werden. Durch die direkte ohmsche Kopplung des Bediengerätes 30 an das Lesegerät 22 über das kurze Steckerkabel 37 und durch die Sicherungsmaßnahmen in Form der fortlaufenden Sicherungs- und Zeitinformationen 24, 27 sowie gegebenenfalls der Hinweisinformation 35 über irreguläre Zeitsprünge ist gewährleistet, daß jedenfalls keine verdeckten Manipulationen im Inhalt des Speichers 39 vorkommen können.

Ebenfalls aus Gründen der Manipulationssicherheit ist vorgesehen, im Bediengerät 30 ausschließlich die über die Antennen 17 eingelesenen Folgen von danach entschlüsselten Identinformationen 19' (wie vorstehend erläutert ergänzt um Zusatzinformationen) unverändert abzuspeichern, aber nicht weiter zu verarbeiten. Dafür ist vielmehr ein zentrales Auswertegerät 43 vorgesehen, in dessen Rechner 44 die speziell geprüften und zugelassenen Programme für die konkret anstehende Datenaufbereitung betrieben werden, etwa zur Ermittlung einer Wettkampf-Rangfolge nicht nur unter Berücksichtigung des Einlauf-Zeitpunktes der einzelnen Teilnehmer (personifizierten Objekte 11), sondern auch beispielsweise unter Berücksichtigung besonderer Bonus- oder Malus-Vorgaben zum Leistungsausgleich einzelner für den Wettbewerb gemeldeter Teilnehmer-Identnummern (Informationen 19'). So werden also nur und erst in dem zentralen Auswertegerät 43 - welches etwa im Vereinslokal einer Brieftauben-Reisevereinigung betrieben wird - aus den in verschiedenen Bediengeräten 30 unter Echtzeit-Zuordnung abgespeicherten Identinformationen 31 die Siegerlisten, Wettergebnisse und Preistabellen erstellt und beispielsweise auf einem Bildschirm 45 angezeigt oder mittels eines Druckers 42 dauerhaft dokumentiert.

Ebenfalls um sicherzustellen, daß Übertragungsfehler oder gar Manipulationen ausgeschaltet sind, werden die einzelnen über ihre Weichen 38 in das zentrale Auswertegerät 43 einzulesenden Bediengeräte 30 nicht etwa über Modems und Telefonleitungen miteinander gekoppelt; sondern jedes zur Daten-Zwischenspeicherung eingesetzte Bediengerät 30 muß über das Steckerkabel 37 vom Lesegerät 22 getrennt und körperlich zum zugeordneten Auswertegerät 43 verbracht werden, wo der Inhalt des Speichers 39 mittels eines anderen Steckerkabels 37' zur weiteren Verarbeitung übertragen wird. Damit kann zugleich das Löschen des Speichers 39 bewirkt oder wenigstens vorbereitet werden, um sicherzustellen, daß die einmal in das zentrale Auswertegerät 43 eingelesenen Echtzeit-Identinformationen 31 von einem bestimmten Bediengerät 30 nicht hier oder anderweitig noch ein zweites Mal eingespeist werden können.

## Patentansprüche

1. Einrichtung zum manipulationssicheren Erfassen von mit Objekten (11) verknüpften Echtzeit-Informationen, insbesondere zum Erfassen von Identinformationen (31) bezüglich Wettkampfergebnissen wie beispielsweise Brieftauben-Preisflugdaten, in einem Speicher, der berührungslos von die Objekte (11) ständig individualisierenden Kennungsträgern (12) erfaßte und zur Verknüpfung mit Ergänzungs- und SicherungsInformationen (24, 27, 35) in ein Lesegerät (22) übergebene, verschlüsselte Identinformationen (19) als Folge von Echtzeit-Identinformationen (31) vom Lesegerät (22) aufnimmt und der dann an anderem Orte unmittelbar an ein Auswertegerät (43) zur Datenübergabe anschließbar ist,
**dadurch gekennzeichnet,**
daß zur Zwischenspeicherung der Identinformationen (31) ein transportabler Speicher (Bediengerät 30) vorgesehen ist, der vor körperlichem Verbringen zur Datenabgabe an das Auswertegerät (43) vom Erfassungs- und Lesegerät (20-22) zur Datenaufnahme zu trennen ist.

2. Einrichtung nach Anspruch 1,
dadurch gekennzeichnet,
daß die Datenübertragung aus dem Bediengerät (30) in das Auswertegerät (43) über Steckerkabel (37') nach Auftrennen der Verbindung zum Lesegerät (22) erfolgt und das Auswertegerät (43) einen Rechner (44) enthält, der zur Sortierung und Wiedergabe der aus verschiedenen Bediengeräten (30) übernehmbaren Echtzeit-Identinformationen (31) programmiert ist.

3. Einrichtung nach Anspruch 1 oder 2,
dadurch gekennzeichnet,
daß das Bediengerät (30) mit einem manuell betätigbaren Interface (40) für Darbietung wenigstens eines Teiles der abgespeicherten Folge an Echtzeit-Identinformationen (31) mittels eines Displays (41) oder eines Druckers (42) ausgestattet ist.

4. Einrichtung nach einem der vorangehenden Ansprüche,
dadurch gekennzeichnet,
daß der Folge verschlüsselt aufgenommener Identinformationen (19) zur Kontinuitätskontrolle eine fortlaufende Hintergrundinformation (24) überlagert ist.

5. Einrichtung nach einem der vorangehenden Ansprüche,
dadurch gekennzeichnet,
daß jede vom Lesegerät (22) aufgenommene Identinformation (19) mit einer aktuellen Zeitinformation (27) aus einer autonomen Uhrenschaltung (28) kombiniert wird, die mittels eines Zeitempfängers (29) für die über Funk verbreitete gesetzliche Zeit korrigierbar ist.

6. Einrichtung nach Anspruch 5,
dadurch gekennzeichnet,
daß der Zeitempfänger (29) nur in größeren Abständen und insbesondere nicht während der Aufnahme einer Folge von Identinformationen (19) auf die interne Uhrenschaltung (28) geschaltet ist.

7. Einrichtung nach Anspruch 5 oder 6,
dadurch gekennzeichnet,
daß wesentliche vom aufgeschalteten Zeitempfänger (29) hervorgerufene Korrekturen in den aktuellen Identinformationen (19) zuzuordnenden Zeitinformationen (27) die zusätzliche Abspeicherung einer Hinweisinformation (35) auf den augenscheinlichen Fehlgang der internen autarken Uhrenschaltung (28) hervorrufen.

8. Einrichtung nach einem der vorangehenden Ansprüche,
dadurch gekennzeichnet,
daß ein über einen Modulator (36) betreibbarer Signalgeber (32) vorgesehen ist, der bei jedem Erfassen einer neuen Identinformation (19) und/oder bei Auftreten signifikanter Sprünge in der fortlaufenden Zeitinformation (27) ansteuerbar ist.

## Claims

1. Device for the manipulation-safe acquisition of items of real-time information linked with objects (11), in particular for the acquisition of items of identification information (31) relating to competition results, such as for example homing-pigeon prize flight data, in a store which receives items of coded identification information (19) as a sequence of real-time identification information (31) From the reading device (22), these items oF coded identification information (19) being acquired without contact from identification carriers (12) permanently individualizing the objects (11) and being transferred for linkage with items of additional and safeguarding information (24, 27, 35) into a reading device (22) and which store can then be directly connected in another place to an evaluating unit (43) for the transfer of data,
characterized in that,
for intermediate storage of the items of identification information (31), a transportable store (control unit 30) is provided which is to be separated from the acquisition and reading unit (20-22) for data reception prior to its physical transfer for delivery of data to the evaluating unit (43).

2. Device according to Claim 1,
characterized in that
the transmission of data from the control unit (30) into the evaluating unit (43) takes place by way oF plug cable (37') after separating the connection with the reading device (22), and the evaluating unit (43) includes a computer (44) which is programmed for sorting and reproducing the items of real-time identification information (31) which can be received from different control units (30).

3. Device according to Claim 1 or 2,
characterized in that
the control unit (30) is equipped with a manually operable interface (40) for presentation of at least a portion of the stored sequence of items of real-time identification information (31) by means of a display (41) or a printer (42).

4. Device according to one of the preceding claims,
characterized in that,
For checking continuity, the sequence oF items of identification information (19) received in code is superimposed with an item oF continuous background information (24).

5. Device according to one of the preceding claims,
characterized in that
each item of identification information (19) received by the reading device (22) is combined with an actual item of time information (27) from an autonomous clock circuit (28), which can be corrected by means of a time receiver (29) for the legal time broadcast by radio.

6. Device according to Claim 5,
characterized in that
the time receiver (29) is only connected to the internal clock circuit (28) at infrequent intervals and in particular not during the reception of a sequence of items of identification information (19).

7. Device according to Claim 5 or 6,
characterized in that
significant corrections produced by the switched-on time receiver (29) relating to items of time information (27) to be associated with the actual items of identification information (19) give rise to the additional storage of an item of reference information (35) relating to the obvious malfunctioning of the internal self-sufficient clock circuit (28).

8. Device according to one of the preceding claims,
characterized in that
a signal transmitter (32) which can be operated by way of a modulator (36) is provided which can be triggered with each acquisition of a new item of identification information (19) and/or with the occurrence of significant leaps in the item of continuous time information (27).

## Revendications

1. Dispositif pour la saisie, sans risques de manipulation, d'informations en temps réel, liées à des objets (11), en particulier pour la saisie d'informations d'identification (31) concernant des résultats de compétition tels que par exemple des données relatives à des vols primés de pigeons voyageurs, dans une mémoire, qui reprend d'un appareil de lecture (22) des informations d'identification (19) codées, saisies sans contact par des supports de caractéristiques d'identification (12), individualisant en permanence les objets (11), et transmises pour la liaison avec des informations de complément et de protection (24, 27, 35), dans l'appareil de lecture (22), en conséquence d'informations d'identification en temps réel (31), et qui peut être ensuite raccordée, en un autre lieu, directement à un appareil d'exploitation (43), pour le transfert des données,
caractérisé
en ce que pour le stockage intermédiaire des informations d'identification (31) il est prévu une mémoire portable (appareil de commande 30), qui, avant l'amenée physique à la sortie de données à l'appareil d'exploitation (43), doit être séparée de l'appareil de saisie et de lecture (20 à 22) pour l'enregistrement des données.

2. Dispositif selon la revendication 1,
caractérisé
en ce que la transmission des données, de l'appareil de commande (30) dans l'appareil d'exploitation (43), s'effectue par des câbles à connecteur (37') après séparation de la liaison avec l'appareil de lecture (22) et l'appareil d'exploitation (43) contient un calculateur (44), qui est programmé pour le tri et la restitution des informations d'identification en temps réel (31), pouvant être reprises de différents appareils de commande (30).

3. Dispositif selon la revendication 1 ou 2,
caractérisé
en ce que l'appareil de commande (30) est équipé d'une interface (40), actionnable manuellement, pour la présentation d'au moins une partie de la séquence mémorisée d'informations d'identification en temps réel (31), au moyen d'un écran (41) ou d'une imprimante (42).

4. Dispositif selon l'une des revendications précédentes,
caractérisé
en ce qu'une information de fond (24) est prioritaire sur la séquence d'informations d'identification (19), enregistrées codées, pour le contrôle de continuité.

5. Dispositif selon l'une des revendications précédentes,
caractérisé
en ce que chaque information d'identification (19), reprise par l'appareil de lecture (22), est combinée avec une information de temps (27) actuelle provenant d'un circuit d'horloge (28) autonome, qui peut être corrigée au moyen d'un récepteur de temps (29), pour le temps légal diffusé par radio.

6. Dispositif selon la revendication 5,
caractérisé
en ce que le récepteur de temps (29) n'est branché sur le circuit d'horloge (28) interne qu'à de grands intervalles et en particulier pas pendant la réception d'une séquence d'informations d'identification (19).

7. Dispositif selon la revendication 5 ou 6,
caractérisé
en ce que des corrections essentielles, provoquées par le récepteur de temps (29) branché, des informations de temps (27) à affecter aux informations d'identification (19) actuelles, provoquent la mémorisation supplémentaire d'une information d'indication (35) concernant le fonctionnement défectueux apparent du circuit d'horloge (28) interne, autonome.

8. Dispositif selon l'une des revendications précédentes,
caractérisé
en ce qu'il est prévu un transmetteur de signaux (32), à faire fonctionner par l'intermédiaire d'un modulateur (36), lequel transmetteur de signaux peut être commandé à chaque saisie d'une nouvelle information d'identification (19) et/ou à l'apparition de sauts significatifs dans l'information de temps (27) continue.
